# EUROPEAN PATENT APPLICATION

(11) **EP 0 636 846 A1**
(43) Date of publication of application: **01.02.1995**
(21) Application number: 93830342.7
(22) Date of filing: 30.07.1993
(51) Int. Cl.: F26B 21/02, A23B 4/03, F24F 13/00

(54) **A system for distributing air in rooms for the processing of food products**

(71) Applicant: TRAVAGLINI ARNALDO S.r.l., I-20092 Cinisello Balsamo, Milano (IT)
(72) Inventor: Travaglini, Roberto, c/o TRAVAGLINI ARNALDO S.r.l., I-20092 Cinisello Balsamo, Milano (IT)
(74) Representative: Perani, Aurelio

(57) **Abstract**

A system (40) for distributing air in rooms (1) intended for the processing of food products comprises a conditioning unit (8) which sends air into two pipes (14, 15) and from these into two distribution manifolds (23, 24). Variable-speed fans (19, 20) are interposed between the pipes (14, 15) and the manifolds (23, 24) for separately and precisely regulating the flow-rate of air to the manifolds (23, 24) in order to perform food-processing cycles.

## Description

The present invention relates in general to a system for distributing air in rooms for the processing of food products.

In particular, some examples of use relate to charcuterie-curing cycles using dehumidifying systems, for example, for salami, dry-cured ham and the like, or relate to cooking systems using dry- or moist-air ovens, for example, for mortadella and cooked charcuterie, and possibly also smoked products, or relate to the production of cheeses and the like.

For example, suitable rooms dehumidified by appropriate conditioners are used for processes such as drying and curing during the commercial production of charcuterie.

The product is subjected to cycles providing for conditioned air-flows which pass over the charcuterie to remove the moisture therein.

The charcuterie then needs a period of rest in order to recover, after which the cycle starts again.

The process takes place in a suitable room which has at least two substantially flat, facing walls, and into which the air is blown vertically in two separate flows which descend along the walls.

When they reach the floor, the flows are diverted in contact with the floor until they meet, forming a vertically ascending column of air.

The position of the column relative to the facing walls along which the flows descend is determined by the flow-rates of the two starting flows.

If their flow-rates are equal, the ascending column will form in the centre of the room. If one of the two flow-rates is greater than the other, the ascending column will form nearer to the flow with the lesser flow-rate.

By adjusting the two flow-rates, it is therefore possible to vary the position of the ascending column which will pass over the charcuterie, which is stowed in the room, raised from the floor.

Normally, the flow-rates of the two flows are adjusted with the use of shutters or plates in the delivery ducts of the conditioner.

These enable the cross-section reserved for the passage of the individual flows to be varied but generates non-uniform flow-resistance.

These systems have the disadvantage that they do not allow for fine adjustment of the flow-rates and their behaviour cannot easily be predicted at the design stage.

The same problem is also encountered in the other applications mentioned above.

The technical problem upon which the present invention is based is that of providing an air-distribution system which overcomes the problems mentioned whilst satisfying the requirements mentioned above with reference to the prior art.

The problem is solved, according to the invention, by a system for distributing air in rooms for the processing of food products, comprising at least one air-delivery pipe, characterized in that the pipe divides into two ducts which direct the air into separate distribution manifolds, fans, driven at variable speeds of rotation, being interposed between the ducts and the manifolds.

The main advantage of the present invention consists of the fact that the desired flow-rate in the two distribution manifolds can be achieved by suitable regulation of the rates of rotation of the fans.

Moreover, the point at which the air coming from the two manifolds will meet can be determined by the presetting of minimum and maximum flow-rate values, and the speed of movement of the flow can be determined by the operation of timing means.

Another advantage consists of the fact that the behaviour of the whole system is easy to predict at the design stage since there is no variable flow-resistance due to the interference caused by shutters or plates.

A further advantage results from the fact that the rates of rotation of the fans are adjustable by means of automatic computerized systems.

Further characteristics and advantages of the invention will become clearer from the description of an embodiment of the air-distribution system according to the invention used for the curing of charcuterie, which is given below with reference to the appended drawings provided by way of non-limiting example.

In the drawings:

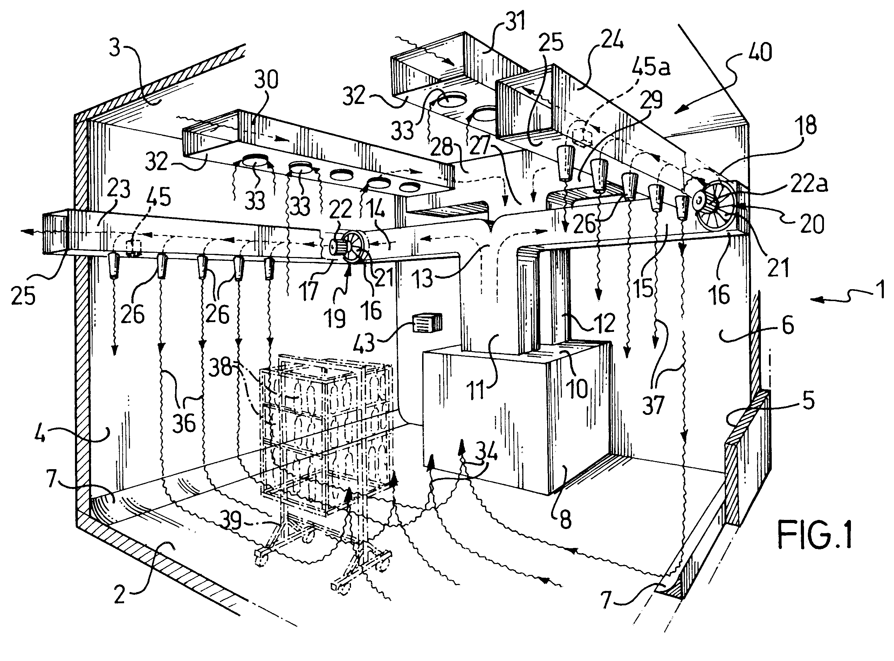

Figure 1 is a perspective view of the charcuterie-drying and -curing room comprising the air-distribution system according to the invention, in partial section,

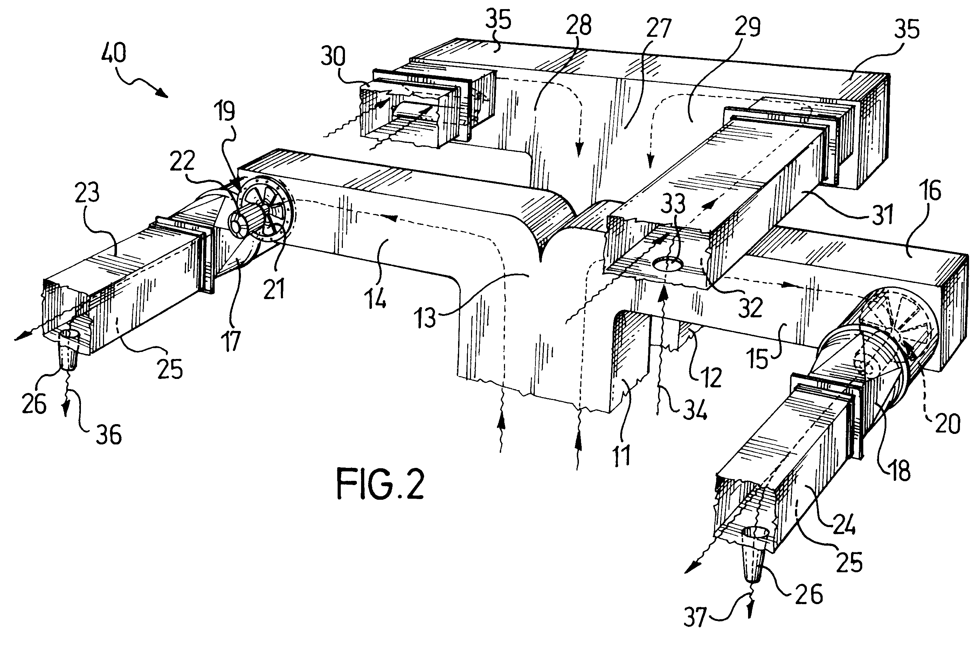

Figure 2 is an upper perspective view of the air-distribution system according to the invention, in partial section,
Figure 3 is a block diagram of the automatic computerized system which regulates the speed of rotation of the fans according to the invention.

In the drawings, a charcuterie-drying and -curing room is generally indicated 1.

It has a floor 2, a ceiling 3, two side walls 4, 5 and an end wall 6.

The side walls 4, 5 and the floor 2 are connected by a concave surface 7.

The room 1 contains the air-distribution system of the present invention, schematically indicated 40.

A thermal conditioning unit 8 is disposed in a central position against the end wall 6 for dehumidifying the air by means of conventional cooling and reheating systems.

The thermal conditioning unit 8 has an upper face 10 from which a delivery pipe 11 and a return pipe 12, both with rectangular cross-sections, extend vertically.

Near the ceiling 3, the delivery pipe 11 divides, at a first "T" junction 13, into two rectangular-sectioned ducts 14, 15 parallel to the end wall 6 and to the ceiling 3.

Near the side walls 4, 5, each of the ducts 14, 15 has a first right-angle junction 16 which leads to a circular-sectioned pipe 17 or 18.

These are parallel to the ceiling 3 and to the side walls 4, 5, against which they are disposed.

Each of the circular-sectioned pipes 17, 18 houses a respective fan, indicated 19 or 20, which, in the embodiment illustrated, is an axial fan comprising a set of blades 21 and a respective electrically-driven motor 22, 22a.

Another type of fan may, for example, be a centrifugal fan with a motor outside the duct.

The axes of rotation of the fans 19, 20 coincide with the axes of the circular-sectioned pipes 17, 18 which house them.

The circular-sectioned pipes 17, 18 are connected, respectively, to distribution manifolds 23, 24 which are shown with rectangular cross-sections in the drawings but may also be of circular cross-section.

They are parallel to the ceiling 3 and to the side walls 4, 5 against which they are disposed.

The distribution manifolds 23, 24 comprise lower faces 25 from which a plurality of frustoconical ejectors 26 extends, the ejectors being disposed in vertical positions facing the floor 2.

The ejectors 26 are aligned in a single row for each face 25 and are spaced apart uniformly.

The return pipe 12, which is also near the ceiling 3, divides, at a second "T" junction 27, into two ducts 28, 29 with rectangular cross-sections, parallel to the end wall 6 and to the ceiling 3.

The ducts 28, 29 then have second right-angle junctions 35 from which respective intake manifolds 30, 31 with rectangular cross-sections extend parallel to the ceiling 3 and to the side walls 4, 5.

The intake manifolds 30, 31 are spaced equally from the side walls 4, 5 and occupy positions intermediate the distribution manifolds 23, 24, so as to be disposed above the floor 2.

The intake manifolds 30, 31 comprise lower faces 32 which have a plurality of intake openings 33.

The dehumidified air emitted by the thermal conditioning unit 8 passes through the delivery pipe 11, the first "T" junction 13, the ducts 14, 15, and the first right-angle junction 16, until it comes to the fans 19, 20.

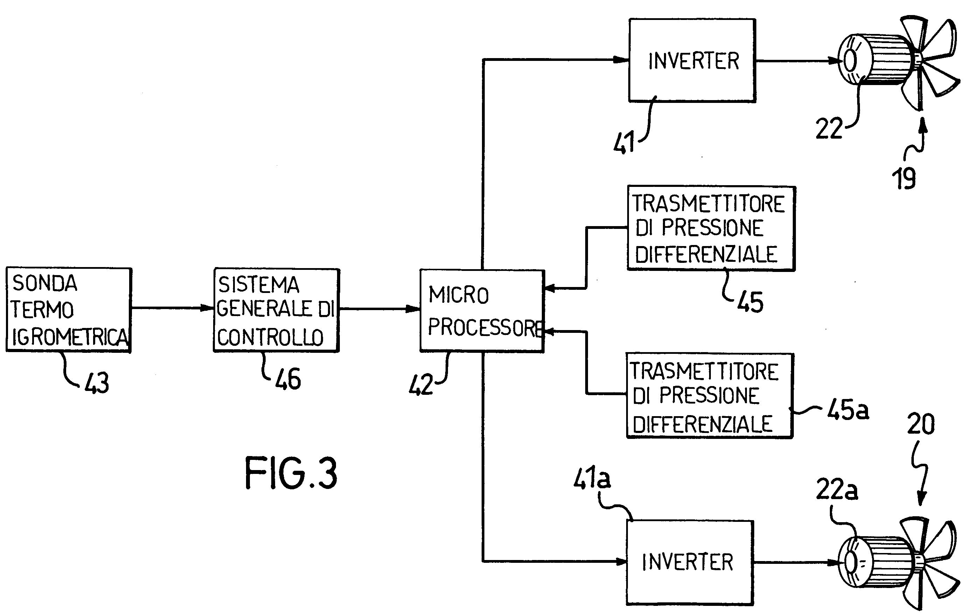

The speeds of rotation of the fans 19, 20 are regulated by the variation of the frequency and/or the voltage of the electrical energy which supplies the motors 22, 22a, with the use of respective programmed inverters 41, 41a shown in the block diagram of Figure 3.

The separate variation of the speeds of rotation of the fan 19 and of the fan 20 enables the flow-rate of dehumidified air in the distribution manifolds 23, 24 to be regulated precisely.

According to one embodiment of the invention, the inverters 41, and 41a are controlled by a microprocessor 42 which receives the air-speed data directly and receives the hygrothermal data relating to the room 1 by means of a general control system 46.

The hygrothermal data are collected by a probe 43 fixed to a wall of the room and the air-speed data are collected by probes 45, 45a disposed in the two distribution manifolds 23, 24. In particular, the probes 45, 45a for measuring the air speed are constituted by conventional differential-pressure transmitters.

The data are sent to the microprocessor 42.

The microprocessor 42 will then use a suitable programme which can provide the correct speeds of rotation, taking into consideration the type of charcuterie to be produced and the type of curing to be achieved, as well as the data mentioned above.

The flow-rates of dehumidified air coming from the manifolds 23, 24 give rise to two flows 36, 37 which are output from the frusto-conical ejectors 26 and which flow in contact with the walls 4, 5.

The flows 36, 37 then encounter the concave surfaces 7 connecting the side walls 4, 5 and the floor 2, which guide the flows 36, 37 in contact with the floor 2.

The meeting of the flows 36 and 37 gives rise to an ascending column 34 of dehumidified air passing over the charcuterie 38 which is suspended on suitable trolleys by hooks 39.

The position of the ascending column 34 relative to the walls 4, 5 depends on the flow-rates of the air of the flows 36, 37. If the flow-rate of the flow 36 is greater than the flow-rate of the flow 37, the ascending column 34 will be closer to the wall 5, and vice versa.

If the air flow-rates are varied cyclically, the air will flow over the charcuterie 38 uniformly over the width of the room during the dehumidification period, by virtue of this air-distribution system.

The presetting of minimum and maximum flow-rate values corresponding to different known speeds of rotation enables the speed of movement of the dehumidified air-flow which passes over the charcuterie 38 to be determined with the use of the timed inverter 41.

Naturally, an expert in the art could apply many variations and modifications to the air-distribution system described above in order to satisfy specific and incidental requirements, but all within the scope of the protection of the invention as defined by the following claims.

## Claims

1. A system for distributing air (40) in rooms (1) for the processing of food products, comprising at least one air-delivery pipe (11), characterized in that the pipe (11) divides into two ducts (14, 15) which direct the air into separate distribution manifolds (23, 24), fans (19, 20), driven at variable speeds, being interposed between the ducts (14, 15) and the manifolds (23, 24).

2. An air-distribution system (40) according to Claim 2, characterized in that the delivery pipe (11) comprises at least one thermal conditioning unit (8).

3. An air-distribution system (40) according to Claim 1, characterized in that the fans (19, 20) are driven by respective electric motors (22, 22a) supplied with alternating electrical current of variable frequency and/or voltage, regulated by respective inverters (41, 41a).

4. An air-distribution system (40) according to Claim 3, characterized in that the inverters (41, 41a) are controlled by a suitable microprocessor (42) using a programme which takes account of the hygrothermal and air-speed data relating to the room (1) for the processing of the food products.
